# EUROPEAN PATENT APPLICATION

(11) **EP 4 195 164 A1**
(43) Date of publication of application: **14.06.2023**
(21) Application number: 21213993.5
(22) Date of filing: 13.12.2021
(51) Int. Cl.: G06V 10/56, G06T 7/73, G06V 10/24, G06V 10/25, G06V 30/14, G06V 10/22, G06V 20/62

(54) **ROBUST REMOTE INSTRUMENT READING**

(71) Applicant: Ispark, 4000 Liège (BE)
(72) Inventor: DUTTA MAJUMDAR, Indranath, 4000 Liège (BE)
(74) Representative: Calysta NV

(57) **Abstract**

System for reading of an instrument (1): a reader device (10) comprising a camera (5) for taking an image of a display (5) of the instrument (1); a processing means configured to perform the steps of: detecting position of a marking in the image based on a combination of first color regions and second color regions, wherein the marking comprises a first color and a second color, and determining based on the position of the detected marking in the image an instrument value shown in the display (5) of the instrument (1) in the image. The first color regions refer to the at least one region of the image having a color in a first color range around the first color, and the second color regions refer to the at least one region of the image having a color in a second color range around the second color.

## Description

### Technical Field

The present invention relates to the remote reading of instruments in industrial plants to connect existing instruments which do not provide the possibility to digitally send the instrument measurement values.

### Prior art

Industrial plants have a large number of measurement parameters in the production process. These parameters are recorded for process engineering, for process monitoring, for reporting and for eventual use in regulatory and financial items as well. Modern connected sensors record these parameters and send them to central parameter collection point, normally a server where the parameters are stored in a database for further use and processing. Connected sensors allow real-time parameter monitoring and a real-time control of an optimized manufacturing process as the data are measured and stored in real-time and continuously.

However, many existing plants have a large number of old sensors which are not connected. Many of such sensors or instruments measure a parameter and show the parameter in a display. The display can be a needle gauge, a seven-segment display (SSD) or other display type to show the parameter value currently measured. Field officers have the job to go through the plant and note all these parameters values on paper with the corresponding reading time and insert these parameter values in the database. A first step of digitalization is to use a tablet with a data entry interface for directly writing the read parameter values in the database. This process is not only very work-intensive and error-prone, it also provides only a non-continuous and non-real-time reading of the parameters which makes process control inefficient and can lead to bad decision taking.

The replacement of the old sensor with connected sensors is very intrusive and requires replacing a large part of the plant equipment as many instruments are OEM dependent or are built in machinery with custom output ports. In addition, the new connected sensors come from different manufacturers which use different protocols. Thus, a global solution replacing all instruments with connected instruments does not only require replacing a large part of the hardware of the plant, but results also in a significant software management problem as the plant software must read out all the sensors with their different protocols. Some of the protocols might also be protected and can only be accessed by specific manufacturing software for automatizing the plant. This is why still most of the existing factories did not change their parameter capturing process to connected sensors.

This is why nowadays many plants have digitalization projects which only digitize the reading process of the field officer by replacing the paper reading with a tablet reading so that the field officer can write the parameter value read directly in the database. However, this solution does not solve the problem of continuous measurement data as the data are only available when the field office passes by the instrument.

It is further suggested to read the parameter values shown on the display of the instrument by capturing an image of the instrument display by a reader device and detect the parameter value by image processing and store the parameter value detected in the image. This allows to connect easily existing instruments without replacing them. The reader can be used by the field officer or fixedly installed in front of the sensor/instrument. In the latter case, this solution allows a real-time and continuous detection of the instrument parameters. However, even if this idea exists for two decades, there is not yet a product on the market which is robust enough to read the parameter values of the instruments in the difficult conditions of the plants. Varying light conditions, different positions from where the image is taken and many other issues lead to an error rate in the value detection which is not acceptable for industrial purposes.

One problem is that the image of instrument display is not always taken at a 90° angle with respect to the camera axis so that the identification of the display and the detection of the instrument value shown on the display becomes error-prone. This is normally solved by identifying the camera angle with respect to the instrument display surface and transforming the image based on the angle. The detection of the angle can be done based on feature matching like in CN109583324, based on a known form of the instrument such as the circular form of the dial like in JP4787584 or based on markers like for example in WO2019/093449. Feature matching is computationally expensive and requires a high-quality image and thus expensive cameras. The use of known forms of the instrument does not work with all instrument forms and is also error prone when similar forms might appear in the image. The marker solution of WO2019/093449 might be robust but requires a very high image quality and thus a very good camera equipment.

Markers in different realizations placed on the instrument or specific features of the instrument might also be used for rolling the image around the image axis and scaling the image like for example in US2007/0236366 or JP2002/056387A or US6909793 or for identifying certain points in the image needed for detection like in JP2020118484. US6909793 proposes multi-color markers for improving the accuracy of detection of the markers themselves. The color marker is only detected as marker, if the form, size and color of each color region of the marker is correctly detected. This reduces obviously false positive detections due to similar colors in the background. However, it increases also likelihood of the number of failed detections, when one of the two colors is captured in the image differently, maybe due to light conditions. Since at least one color appear quite often differently in a photographic image, at least one or more of the colors in the multicolor markers are very often likely not detected. Specifically, because of the true color use without any hue relaxation in such cases during detection increases cases of false negatives in extreme light conditions.

However, none of the proposed solution proved to be stable enough to be used in the difficult conditions of industrial plants, like varying instrument conditions, light conditions, lack of control on the background distortions, stability of camera position and distance of device from the instrument.

### Brief summary of the invention

It is the object of the invention to provide solution for the above-mentioned problems of the state of the art, in particular to find a robust solution for remote reading of instrument displays based on image recognition.

The problem is solved by a system, reader device, method and computer program according to the independent claims.

The use of two-colored marking, the combination of the first and second color regions each providing the regions of colors in the first and second color ranges, respectively, provides a very robust marking detection under even extreme light conditions. Due to the color ranges, the two colors are even detected, when the light conditions fade one or both colors of the marking into another color. Such a color range strategy with only one color would increase the false positive rate enormously as many other background colors would appear as marking. Due to the combination of the regions of the two-color ranges in the image, the false positives due to the colors in the background are effectively excluded and the marking was detected with a success rate between 95% and 99% (depending on the used combination algorithm) even under the harshest conditions. Existing solutions realized in the harsh light conditions of the industrial reality only a success rate for the detection of the marking of likely significantly less accuracy. Without the use of the color ranges, the marking detection would very often fail, because the likelihood that light conditions make at least one of the two colors of the marking appear in the image differently.

The problem is solved further by a system for reading an instrument; the system comprising a reader device with a camera for taking an image of a display of the instrument; the system comprising a processing means configured to detect in the image an instrument value shown in the display of the instrument in the image, the system is characterized by one of the following embodiments.

The problem is solved further by a reader device comprising: a camera for taking an image of a display of an instrument and a processor configured to detect in the image an instrument value shown in the display of the instrument in the image, the system is characterized by one of the following embodiments.

The problem is solved further by a method for reading an instrument comprising the steps of: taking with a camera of a reader device an image of a display of the instrument; detecting with a processing means in the image an instrument value shown in the display of the instrument in the image; the method is characterized by one of the following embodiments.

The problem is solved further by a computer program for reading an instrument comprising instructions configured, when executed on a processor, to perform the steps of: receiving from a camera of a reader device an image of a display of the instrument; detecting in the image an instrument value shown in the display of the instrument in the image; the computer program is characterized by one of the following embodiments.

Subsequently, further embodiments of the invention are described.

In one embodiment, the detecting the instrument value from the image comprises: detecting position of a marking in the image, and determining based on the position of the detected marking in the image an instrument value shown in the display of the instrument in the image.

In one embodiment, the marking comprises a plurality of markers, wherein a position of each marker is detected in the image and the instrument value is determined based on the positions of the detected markers.

In one embodiment, the step of determining/detecting the instrument value comprises the steps of: determining a three-dimensional transform between the instrument display and the image plane of the image based on the position of the marking (or based on the position of the markers), and determining the instrument value based on the three-dimensional transform between the instrument display and the image plane of the image. The transformation of the image based on the affine three-dimensional transform computed from at least three points in the image provides an improved quality of the transformed image (compared to 2D transforms which just scale and rotate the markers in the image plane) and improves thus the detection of the instrument vale.

Preferably, the step of determining a three-dimensional transform between the instrument display and the image plane of the image comprises the steps: determining the position of at least three marking points in the image based on the detected position of the marking or based on the positions of the markers, and determining the three-dimensional transform between the instrument display and the image plane based on the at least three marking points in the image.

Preferably, the step of determining the instrument value based on the three-dimensional transform comprises the steps of: transforming the image based on the determined three-dimensional transform so that the instrument display is parallel to the image plane, and determining the instrument value from the transformed image.

Also, when the reader device is mounted in a fixed relationship with the instrument display, the marking solution avoids making a recalibration of the reader device each time the reader device might have changed its position slightly. This can happen maybe due to vibrations, wind, a collision with a worker or otherwise.

In one embodiment, the marking comprising a first color and a second color. Preferably, each marker comprises the first color and the second color.

In one embodiment, the position of the marking in the image is determined based on a combination of first color regions and second color regions. Preferably, the first color regions refer to the at least one region of the image having a color in a first color range around the first color, and the second color regions refer to the at least one region of the image having a color in a second color range around the second color.

In one embodiment, the second color of the marking or each marker enclosed the first color. Preferably, processed second color regions are obtained by the second color regions and regions being enclosed by the second color region, wherein the position of the marking is determined based on a combination of the first color regions of the image and the processed second color regions of the image, preferably of a Boolean AND combination of the first color regions of the image and the processed second color regions of the image. This combination algorithm provides a very stable algorithm to determine the position of the marking based on the first and second color regions determined with (large) color ranges. This algorithm works well and is computationally not requiring much power.

In one embodiment, the position of the marking in the image based on the combination of first color regions and second color regions is determined based on an artificial intelligence engine getting the image as an input, wherein the artificial intelligence engine is trained with training images in which the first color of the marking results as a different color in the first color range and/or in which the second color of the marking results as a different color in the second color range. This combination algorithm outperformed in terms of result everything ever seen and provided an incredible success rate of over 99% in detecting the marking under nearly all light conditions. However, the computational power necessary for this combination algorithm is higher than the for the previous combination algorithm.

In one embodiment, the first color range has a range of the hue (hue range) around the hue of the first color, and the second color range has a hue range around the hue of the second color. Preferably, the first color range comprises a range width of more than 40° around the hue of the first color and/or the second color range comprises a range width of more than 40° around the hue of the second color.

In one embodiment, the first color range and or the detection algorithm is preferably defined such that image(s) showing the first color of the marking or the marker as a color having a hue difference of up to 10°, preferably up to 20°, preferably up to 25°, preferably up to 30°, preferably up to 35° (and maybe also beyond) with respect to the (true) first color of the marker are still detected as a first color range or as a first color region.

In one embodiment, the second color range and or the detection algorithm is preferably defined such that image(s) showing the second color of the marking 6 or the marker 6 as a color having a hue difference of up to 10°, preferably up to 20°, preferably up to 25°, preferably up to 30°, preferably up to 35° (or maybe beyond) with respect to the (true) first color of the marker 6 are still detected as a second color range or as a second color region.

Larger hue ranges allow to detect the color of the marking even, when the color of the marking in the image faded into a neighboring color.

In one embodiment, the marking or each marker comprises further a third color, wherein the third color of the marking encloses the second color of the marking. The third color is preferably not used for the detection, but as a contrast color to separate the second color from the background. This avoids that the second color of the marker or marking gets in (pixel) contact with similar colors of the background which might lead to detection errors. Preferably, the hue of the second color and the third color has a hue difference among each other of at least 100°, preferably of at least 120°. Preferably, the third color was chosen yellow which provided very good results as this color does rarely appear in the background and/or because it has a very good contrast to blue. Therefore, blue is chosen preferably as second color.

In one embodiment, the first color and the second color are true colors. True colors allow to define color ranges better and are therefore preferred as marking colors. A true color is a color not being black or white. Preferably the third color is as well a true color.

In one embodiment, the first color and the second color are true colors, wherein a true color is a color not being black or white, wherein preferably the third color is as well a true color.

In one embodiment, the step of determining the instrument value comprises the steps of: determining characteristic position(s) and/or region(s) of the instrument display based the position of the marking and/or based on the positions of the markers in the image or in the transformed image, and determining the instrument value in the image or the transformed image based on the characteristic position(s) and/or region(s).

In one embodiment, the system comprises the marking detected in the image, wherein the marking is configured to be fixed on the instrument so that the image taken by the camera shows the instrument display with the marking.

In one embodiment, the system comprises the instrument and the marking is provided on the instrument.

In one embodiment, the reader device is mounted in a fixed relationship to the instrument such that the camera of the reader device is oriented towards the display of the instrument.

In one embodiment, the system comprises a reader device and a server.

In one embodiment, the reader device comprises a processor configured to detect an instrument value shown in the display of the instrument in the image, wherein the reader device is configured to send in an operation mode the instrument value to the server; wherein in a calibration mode, the reader device is configured to send the image to the server as calibration image, wherein the server is configured to provide calibration information based on the calibration image, wherein the reader device is configured to receive calibration information from the server and to store the received calibration information in a storage of the reader device used in the operation mode to detect the instrument value in the image in the processor of the reader device.

In one embodiment, the reader device is mounted in the operation mode in a fixed relationship with respect to the instrument such that the image taken by the camera shows the display of the instrument.

In one embodiment, the reader device in the operation mode takes a plurality of images of the display of the image at a plurality of different times, wherein the reader device stores the plurality of images in association with the time the image has been taken in the storage of the reader device.

In one embodiment, the reader device is configured, when it receives an updated calibration information for the instrument display from the server, to perform based on the updated calibration information the detection of the instrument value shown in one or more of the plurality of images of the instrument taken before the update of the calibration information has been received.

In one embodiment, the server is configured to request from the reader device an image related to a certain numerical value received at the server, wherein the reader device is configured to send the requested image to the server, wherein the server is configured to update the calibration information based on the requested image.

In one embodiment, the server is configured to receive a user input related to the calibration image to determine the calibration information.

In one embodiment, the user input determines in the calibration image the reference positions of the display needed to detect the instrument value.

In one embodiment, the user input determines in the type of the display shown in the calibration image.

In one embodiment, the instrument comprises a marking or the image shows the instrument display with a marking provided on the instrument, wherein the calibration information comprises geometric information of the display in the calibration image, wherein the geometric information of the display is defined with respect to the marking visible in the calibration image.

Especially, the combination of the remote calibration, the detection of the instrument value in the reader device in the operation mode, the fixed mounting of the reader device with respect to the instrument display and the marking on the instrument are particularly advantageous. The remote calibration allows a very simple and user friendly first calibration of the reader device. The marking avoids that a recalibration is necessary, when the fixed reader device might have a change in the position of the reader device with respect to the instrument display. Finally, for the very rare cases that the detection of the instrument value might fail, the remote calibration can be used to re-calibrate the reader device remotely. This is why said combination of features provides a very user-friendly reader device.

Other embodiments according to the present invention are mentioned in the appended claims, the subsequent description.

### Brief description of the Drawings

Fig. 1 shows a first embodiment of a system for reading an instrument according to the invention.
Fig. 2 shows a second embodiment of a system for reading instrument according to the invention.
Fig. 3 shows a front view of an exemplary embodiment of an instrument with a marking according to the invention.
Fig. 4 shows an example image captured by a camera of a reader device of the display of the instrument shown in Fig. 3.
Fig. 5 shows a transformation of the image of Fig. 4.
Fig. 6 shows an embodiment of the marker according to the invention.
Fig. 7 shows an embodiment for calibrating the reader device.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

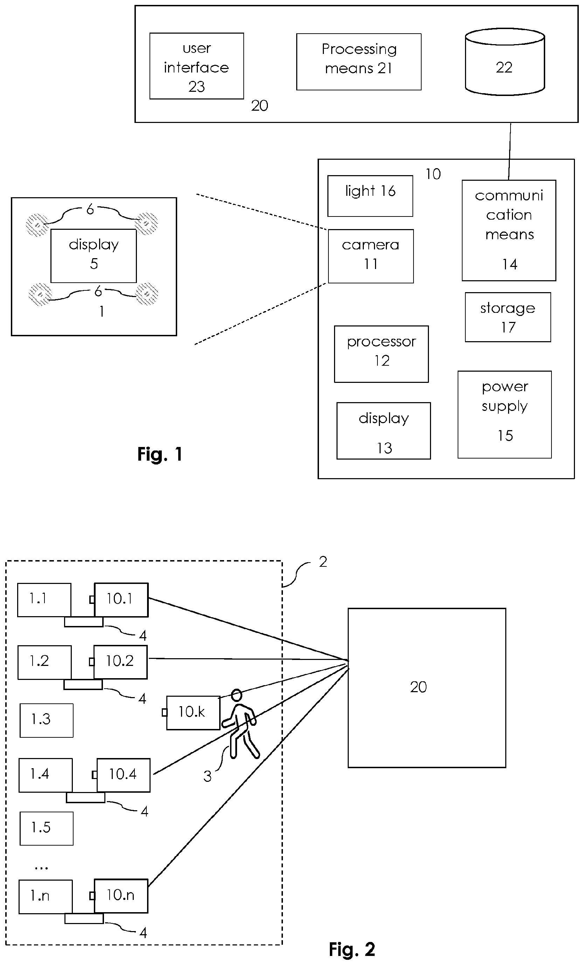

Fig. 1 shows a first example of the system for reading instrument values of an instrument 1.

The instrument 1 comprises a display 5 which outputs a value of an instrument parameter (short instrument value). The instrument parameter is considered as the parameter measured, while the instrument value is considered the measured value of the instrument parameter. For example, the instrument parameter can be a pressure and the instrument value can be 5 bar. The instrument value is normally a numerical value. However, it is also possible that the instrument value is a character or a character sting, e.g. a word. The instrument value can also be one of a plurality of discrete states, e.g. a binary value like on/off. The instrument 1 can be anything giving out an instrument value. The instrument 1 can be for example a sensor which measures or senses the instrument value. Such a sensor can be a thermometer, a pressure sensor, a flow sensor, etc. measuring as instrument vale a temperature, a pressure, a flow, etc. The instrument 1 can also be a machine which gives out a machine parameter as instrument value. The machine parameter is not necessarily measured, but maybe a control parameter which is simply given out. For example, the machine can be a conveyor belt and the machine parameter the speed of the conveyor belt. Preferably, the instrument 1 is an equipment of a plant. A plant shall include any kind of plant like a factory, a pipeline, transportation facility, warehouse, storage area, booter station, pumping station, offshore facility, or any production or logistics facility.

The display 5 of the instrument (also called instrument display) can have any form to give out the instrument value. The display 5 can be digital display or an analogue display. The display 5 can show the instrument value as a numerical value. The numerical value or the instrument value can for example be shown with a seven-segment display (SSD) or a pixel display. It is however also possible that the numerical value or instrument value is shown in an analogue meter device as used in power or water meters, e.g. with one rotating wheel for each decimal position of the number. The numerical value or instrument value can also be shown with a needle display. A needle display is a display with a moving needle which points with the needle on a position on a scale with numbers to output the instrument value. Most needle displays are rotating needle displays for which a needle rotates around a center point and a distal point of the needle points towards a circular shaped scale. Depending on the rotation angle of the needle, a different instrument value is shown in the scale. However, the needle could have a translational movement to show the instrument value on a straight scale. The display can also be a liquid indicator display which shows the instrument value based on the percentage of filling of the liquid in one direction like for example traditional thermometers or filling level indicators. The display 5 can also be a simple display like a light indicator or a combination of light indicators which show with the on and off state of the light a binary value. The display 5 is not limited to the above-mentioned display types. Any other display type showing an instrument value is also possible. Preferably, the display 5 shows the instrument value always in the same way so that the way of displaying the instrument value on the display 5 can be modeled by a display model.

The system comprises a reader device 10 and a processing means. The processing means might be arranged completely in the reader device 10 or completely in a server 20 or might be distributed over the reader device 10 and the server 20. In the first case, all the functions of the processing means are realized by a processor 12 in the reader device. In the second case, all the functions of the processing means are realized by a server processing means 21 in the server 20 (or in a processor connected to the server 20, maybe a client device connected to the server 20). In the third case, all the functions of the processing means are partly realized in the processor 12 of the reader device and partly realized in the server processing means 21 of the server 20 (or in a processor connected to the server 20, maybe a client device connected to the server 20).

The server 20 is any processing means remote from the reader device 10 connected with the reader device 10 via a network, e.g. the internet. The server 20 can be a classic server computer, a cloud computing means constituted by a plurality of server computers, a computing center or other means to establish the functions of a server.

The server 20 comprises a server processing means 21 for realizing the processing functions of the server 20.

The server 20 comprises further a server storage 22 for storing data for the present system. The storage 22 can be a database, a file, or any other means of data storage. The storage 22 can be incorporated in the server 20 or simply connected via a network connection. The storage 22 stores preferably the instrument values read by the reader device(s) 10 associated to the respective instrument 1 and/or associated to the respective reading time. The storage 22 preferably stores the calibration information for each instrument 1, i.e. for each instrument display 5.

The server 20 comprises further a user interface 23 which allows users to access the server 20. The user interface 23 can be a front-end which can be accessed by a browser from a client computing device or a client application on a client computing device of the user. Preferably, the server 20 comprises a user management section for managing a plurality of users. Each user has user credentials to authenticate itself and to access the data of the user. Each user has preferably one or a plurality of reader devices 20 and/or instruments 1 associated to its user access. The user can access, after its login on the server 20, to do certain server operations. One server operation would be to read the instrument values read by the reader devices in the past. One server operation would be to do a calibration or to update a calibration from the reader device. The user interface 23 could also include an API which allows software applications to read out the data from the storage 22.

The server 20 is preferably configured to receive the instrument values of an instrument 1 detected by the reader device 10 and to store the instrument value in the storage 22. The instrument values are preferably sent/uploaded in real time so that the storage 22 has the up-to-date instrument values read by the reader devices 10. If there is an interruption of the communication connection between a reader device 10 and the server 20, the instrument values of the instrument(s) 1 read during the interruption are sent immediately to the server 20, once the communication connection comes back.

The system works with a marking 6 mounted in vicinity of the instrument 1 so that an image of the display 5 would show in the same image the instrument display 5 and the marking 6. The marking 6 has preferably a fixed spatial relationship with respect to the display 5 and/or the instrument 1. This allows to use the marking 6 for detecting the display 5 and its characteristics in the image. This is why the marking 6 is preferably attached to the instrument 1. Preferably, the marking 6 is arranged in a linear plane in the three-dimensional space. Preferably, the marking 6 is arranged in the plane of the display 5 or in a plane parallel to the display 5. However, also other arrangements of the marking 6 would be possible. The marking 6 can be part of the protected system, e.g. a marking 6 which can be mounted on the instrument 1 which shall be monitored with the reader device 10. Preferably, the marking 6 is attached to the instrument 1, e.g. with an adhesive (like a sticker) or with fixing means like a screw. If the instrument 1 does not provide sufficient space for the marking 6, a support is installed on the instrument on which the marking 6 can be attached. The support can be for example a transparent plate which is fixed over the display 5 so that the display 5 is still visible through the support. The support extends outside of the instrument 1, preferably in the plane of the display surface, so that the marking 6 can be arranged on the support around the display 5. Even if it is preferred that the marking 6 is mounted in vicinity to the display 5/instrument 1, the marking 6 can also be a marking 6 already present on the instrument 1, i.e. which does not require installation or mounting.

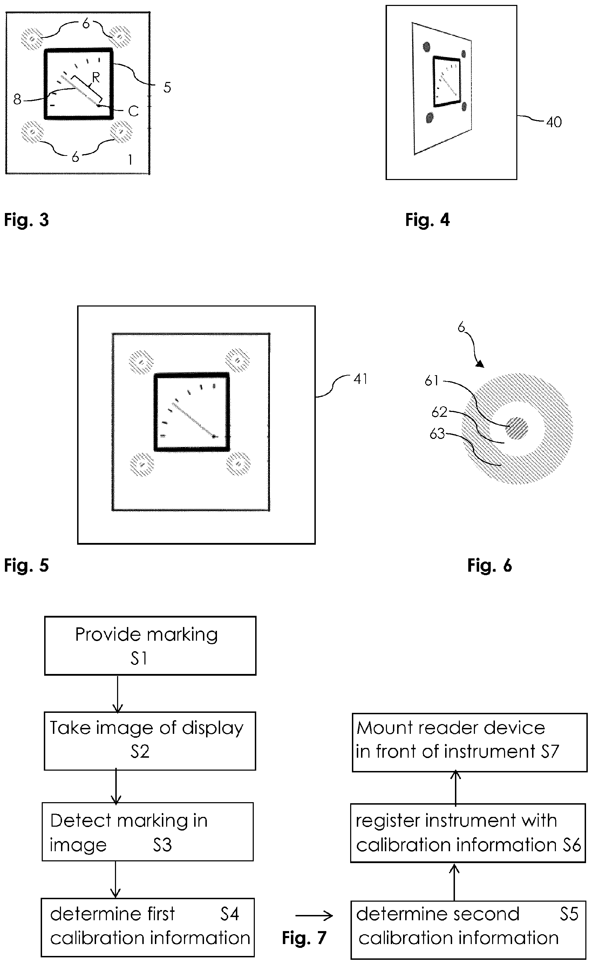

The marking 6 comprises preferably a plurality of markers 6, preferably at least three markers 6, preferably four markers 6. These markers 6 are preferably attached around the display 5. Each marker 6 can be freely attached on the instrument 1 so that the arrangement of the markers 6 can be adapted to the size and form of the display 5 and the available space on the instrument 1. Each marker 6 defines preferably a marking point (location of the marker) on the instrument 1 so that with three markers 6 on the instrument 1, three marking points on instrument 1 can be detected and with four markers 6, four marking points can be detected on the instrument 1. The shape of the marker 6 is in the shown embodiment circular (see Fig. 6). However, any shape which allows to define a marking point is also possible like a polygon, preferably regular polygon. However, instead of using a plurality of markers 6, it is also possible to use one marking 6 with a form which defines at least three marking points on the instrument 1. This could be for example an L shape with the two distal ends and the crossing or corner point defining the three marking points. Or by a cross shape with the four distal ends defining each a marking point. However, it is preferred to have rather a plurality of independent markers 6 (each defining one marking point on the instrument 1) than having one combined marking which defines all the marking points. The independent markers 6 allow to adapt the arrangement of the marker points to the form and size of the respective display 5. Also, a mixture is possible of using for example two complex markers which each define at least two marking points.

The marking or each marker 6 has preferably at least two colors, preferably three colors. Subsequently, the invention will be explained with three colors, but it works also with two colors or with more than three colors. Fig. 6 shows an example of the marker 6 with a first color 61, a second color 62 and a third color 63. Preferably, the marker 6 is drawn by three colors having the same shape (maybe with slightly different sizes) so that the marker 6 is drawn like with a (wide) multicolor pen. Preferably, the marking 6 or the marker 6 has a multi-color contour line, wherein the innermost line color is used to fill the marker 6 with this color. In the shown embodiment, the marker 6 is a circle of the first color 61 (having an inner diameter corresponding to the diameter of the circle of the first color 61), a circular ring of the second color 62 and a circular ring of the third color 63 (having an inner diameter corresponding to the outer diameter of the circular ring of the second color 62). Preferably the different colors 61, 62 and 63 are arranged concentrically around an axis. Center point of the marker 6 is for example the marking point for this marker 6. This center point can be determined based on just the first color 61, just the second color 62 or just the third color 63, if only one of the at least two colors of the marker 6 are detected or based on any sub-combination of colors which can be detected.

The at least two colors 61, 62, 63 are preferably true colors. A true color is a color which has a detectable hue in a hue color space. A hue color space is a color space defining the color with one parameter being the hue. The hue in the hue color space can be a value between 0° (red) and 360° (red again). Intermediate values are for example 60° (yellow), 120° (green), 240° (blue). Examples for hue color spaces are the HSV (hue, saturation, value) or the HSL (hue, saturation, lightness) space. If the color is represented in another color space like RGB, it can always be transformed into a hue color space. In other words, a true color is a color not being black or white or a mixture of those (grey). Thus, true colors are colors like blue, green, orange, red, yellow, etc. Preferably, the at least two colors 61, 62, 63 are colors with a hue difference of at least 60° between each two colors 61 and 62. Preferably, the second color 62 is a color contrasting the neighboring first and/or second color 61, 63. Preferably, the second color 62 has with respect to the third color 63 a hue difference of at least 90°, preferably of at least 120°, preferably of at least 140°, preferably of at least 150°, preferably of at least 160°, preferably of at least 170°. A hue difference between two colors is considered as the shortest angle difference between the two colors on the hue circle in the hue color space. In the current example, the hue difference between the third color 63 (yellow) and the second color (blue) is 180°, the maximum possible hue difference. This allows to robustly distinguish the second and third color 62, 63 in an image of the marker 6. In addition, the third color 63 around the second color 62 separates the second color 62 from disturbing background color. For example, black is very common in instruments and could appear as blue in the image. The third color 63 guarantees that the second color 62 of the marker 6 is not mixed with a color of the background which seem the second color 62 in the image. Preferably, the second color 62 has with respect to the first color 61 a hue difference of at least at least 90°, preferably of at least 100°, preferably of at least 110°. In the current example, the hue difference between the first color 61 (red) and the second color (blue) is 120°. By choosing the first color 61 and the second color 62 contrasting colors, it is almost impossible that they are detected in the image as the same color, i.e. as having the same hue.

The reader device 10 comprises a camera 11. The reader device 10 comprises preferably further one or more of a processor 12, a display 13, a communication means 14, a power supply 15 and a light 16.

The camera 11 is configured to take an image 40 of the display 5 of the instrument 1. Fig. 4 shows an example of such an image 40 taken of the display 5 of the instrument shown in Fig. 3. The camera 11 is preferably a digital camera which measures each pixel of the image electronically so that the image can be processed directly after taking the image.

The display 13 is preferably configured to output the instrument value detected in the reader device 10 from the image of the display 5 of the instrument 1 taken by the camera 11. The display 13 can further output other information like a graph with the historical values of the instrument 1 monitored by the reader device 10 or statistical value obtained by combining the currently detected instrument value and at least one previously detected instrument value of the same instrument 1. However, the display 13 can also be omitted.

The communication means 14 is configured to communicate with the server 20. In a preferred embodiment (in the operation mode), the processor 12 of the reader device 10 detects the instrument value in the image obtained by the camera 11 and sends the instrument value to the server 20 (without the necessity to send the image). However, in a less preferred embodiment, it is also possible (in the operation mode) to send the image of the instrument display 5 to the server 20 and perform in the server 20 the detection of the instrument value from the image sent. The communication means 14 is preferably a wireless communication means like WLAN, WIFI, LORA, a mesh-network, or other. However, the communication means can also be wire based, like over a LAN network or a power supply communication network.

The power supply 15 supplies the reader device 10 with power. The power supply 15 comprises preferably a cable connection to a power supply network. This power supply network is preferably the national power supply network like a 220 V AC power network in Europe. However, the power supply network can also a DC power supply network installed in a factory or another power supply network. In addition or alternatively, the power supply 15 comprises preferably a battery. The battery allows to continue to operate, when the power breaks down and allows to operate the reader device 10 in locations where there is no power supply available. In the latter case, the battery must be exchanged regularly.

The light 16 is preferably configured to illuminate the display 5, if the detection of the instrument value of the display 5 is not possible with the current light conditions. In another embodiment, the light 16 is always on, when taking the image of the display 5 of the instrument 1 with the camera 11.

The storage 17 is configured to store the image 40 taken with the camera. Preferably, the storage 17 stores a number of images 40 taken with the reader device associated to the instrument 1 (if the reader device 10 reads more than one instrument 1) and associated to the time, when the image 40 has been taken. Preferably, the storage 17 stores further the instrument value detected for each stored image 40. Preferably, the storage 17 stores as well the time, when the respective image(s) 40 have been taken. Instead of the image 40 or in addition, the transformed image 41 can be stored. The storage 17 stores preferably also calibration information necessary for the instrument(s) 1 to be read by the reader device 10.

The processor 12 is preferably configured to coordinate the functions of the other parts of the reader device 10 and/or eventually perform the or some functions of the processing means of the system.

In one embodiment, the reader device 10 is fixed with respect to the instrument 1 so that the image 40 of the instrument display 5 is captured by the camera 11 always from (substantially) the same perspective. Substantially the same perspective is that the camera 11 is fixed with respect to the instrument display 5, but movements like vibrations of the instrument 1 or the camera 11 lead to only some minor modifications of the perspective. In this case, the reader device 10 is preferably fixed with a fixation device 4 in a fixed spatial relationship to the instrument 1.

In another embodiment, the reader device 10 is used as a handheld device for a field officer which goes around and reads the instrument values of different instruments 1. In this case, each instrument 1 comprises preferably further a code on the instrument 1 which is detectable from the image 40 so that the processing means can identify the instrument 1 in the image 40 before starting the detection of the instrument value. The code can be for example a bar code or a QR code. This code is preferably attached to the instrument 1 in the vicinity to the display 5 such that the code appears in an image 40 taken of the display 5. It is for example possible to use a smartphone or tablet for the hardware of the reader device 10. However, preferably a dedicated reader device 10 is used so that the hardware can be optimized for the current purpose.

The processing means of the system (in the operation mode) is configured to detecting the instrument value of the display 5 in the image 40 taken by the camera 11. This is normally done by storing for the display 5 a display model information based on which the instrument value output by the display 5 can be detected from the image 40. The display model information comprises preferably the type of the display 5 and the model parameters for this type of display. The type of display 5 defines a model of the display and the model parameters define the realization of this type of display 5 (size, position, etc.). The display model information or the model parameter comprises preferably geometrical information about the key parameters of the display 5 necessary to detect the numerical value shown on the display 5. The geometrical information is expressed with respect to a reference image of the display 5 of the instrument 1. Where the model parameter is position in the reference image (model parameter position), the model parameter is defined with respect to at least one reference position in the reference image, preferably with respect to at least one marking point 6 (as will be described afterwards) in the reference image. The needle center is an example of a model parameter position. Where the model parameter is a length or size in the reference image (model parameter length), the model parameter is defined with respect to a distance in the reference image, preferably with respect to a distance between two marking points 6 in the reference image. The needle radius is an example of a model parameter length. The geometrical information is expressed with respect to a reference position in the instrument 1, preferably with respect to at least one marking point 6 in a reference image of the display 5. The reference image is preferably a front view of the display 5, i.e. the reference image has preferably an image plane parallel to the surface of the display 5. The display model information comprises for each type of display 5 a different model with different model parameters. For example for a SSD, the region of the display for each character is stored in the display model information so that each character of a character sequence can be detected by an optical character recognition (OCR) algorithm. For a rotating needle display like the one shown in Fig. 3, the position of the center point C around which the needle 8 rotates, the radius R which shall be used for detecting the needle angle and at least two scale value with their associated needle angle can be used as display model parameters. For each type of display, there might be a different display model necessary. The display model information for the display 5 allows thus to detect the numerical value output by the display 5 in an image 40 showing the display 5.

The detection of the numerical value in the image 40 (based on the display model information) provides however several challenges. One challenge is that the image 40 is not always taken from the same perspective as the reference image which makes it harder to apply the display model parameters on the image 40. Many other challenges exist. One way of overcoming several challenges is the detection of the marking 6 on the instrument 1 in the image 40.

Preferably, the processing means detects the marking 6, preferably the markers 6 in the image 40 and detects the instrument value of the display 5 in the image 40 based on the detected marking or markers 6. Preferably, the processing means detects the position of the marking 6, preferably the positions of the markers 6 in the image 40 (marking points or marker points) and detects the instrument value of the display 5 in the image 40 based on the detected position of the marking or on the detected positions of the markers 6. Subsequently, for the sake of brevity, the invention is described just for the embodiment with a plurality of markers 6 as marking. However, it is clear that the position of the marking can equally be used for the subsequent purpose. The detection of the positions of the markers 6 in the image 40 (marker points or marking points) allows to determine a three-dimensional orientation of the display 5 or the instrument 1 with respect to the camera 11. An image 40 of three points in the three-dimensional space with a fixed spatial relationship among them can be used to determine the orientation of the three points (and thus of the display 5 having a fixed relationship to the three points) with respect to the camera 11 having taken the image 40. This is done using the camera parameters and/or the spatial relationship of the markers 6 among them and/or calibration information. Since the spatial relationship among the markers 6 varies in the shown embodiment from each instrument 1 to another as the markers 6 are arranged on the instrument 1 differently, preferably, the orientation is determined using calibration information for the markers 6. The calibration information used can be for example the rough position of the markers in the image 40 (when the reader device 10 has a fixed spatial relationship with respect to the instrument display 5) and/or the position(s) of the marking or markers 6 (marking point(s)) in the reference image. The determined orientation of the display 5 in the image 40 with respect to the camera 11 can be used to determine an orientation of the display 5 in the image 40 with respect to a reference orientation. The determined orientation of the display 5 in the image 40 (with respect to the camera 11 or the reference orientation) can be used for improving the detection of the numerical value of the display 5.

The determined orientation or the positions of the markers 6 are used to determine a three-dimensional (affine) transformation of the image 40 into a transformed image 41 in which the display 5 has the reference orientation, i.e. the orientation of the reference image. This reference orientation is preferably an orientation in which the display 5 is parallel to the image plane and/or perpendicular to the camera axis of the camera 11. Fig. 5 shows such a transformed image 41. This allows to transform the image 40 of the display 5 into an image 41 which corresponds to the orientation of the display 5 which was used to store the display model information, i.e. the reference image. The transformation can also scale the image such that the transformed image corresponds to the reference image. This facilitates thus to find the relevant portions of the transformed image 41 necessary for detecting the instrument value of the display 5 and to apply the same detection algorithm on the transformed image 41 (at least for the same type of display). This makes the detection algorithm much simpler and much more robust. For example, for an SSD, the region of each character is identified based on the display model information and identified by an OCR algorithm. Then, the identified character values are combined based on the display model information to provide the instrument value. For example, for the rotating needle display, center point C of the needle 8 is identified in the image 41 and the accumulated intensity value along a radial line extending radially from the center point C is calculated in the radius region R provided by the model information for different angles. The current needle position is detected based on the different accumulated intensity values over the different angles. In the example of Fig. 3, the angle with the maximum accumulated intensity value corresponds to the detected needle angle. Based on the detected needle angle, the instrument value can be calculated based on the at least two scale value associated to their corresponding angles. For example, the two scale values could be the minimum scale value and the maximum scale value and their corresponding associated angle. In a linear scale, the remaining angle position could be easily extrapolated to their corresponding instrument values. It is however also possible to create a look-up table which covers for each angle the corresponding value.

The markers 6 are preferably further used to define the geometrical information of the display 5 with respect to the marking 6 or at least one marking point.

One problem of all existing solutions for detecting instrument values from instrument displays 5 using markers is that the detection of the markers 6 depend heavily on the light conditions. However, especially in industrial plants where the application of this technology would be particularly beneficial, the light conditions can vary over time extremely from very strong sun light, darkness or other light condition like manufacturing conditions. Extreme sun light could make change the appearance of one or several colors completely in the image 40 or 41. This is why the following is suggested, if the light conditions are difficult.

The processing means detects preferably the position of the marking in the image 40 based on a combination of first color regions and second color regions. The first color regions refer to the at least one region of the image 40 having a color in a first color range around the first color 61. The second color regions refer to the at least one region of the image 40 having a color in a second color range around the second color 61.

The first color range is preferably defined as a color range around the first color 61 of the marker 6. The first color range is preferably larger than 20°, preferably larger than 30°, preferably than 40°, preferably than 50°, preferably than 60°, preferably than 70° around the hue of the first color 61. For example, a first color range being 80° around the first color can be a range of +/- 40° of the hue of the first color 61. The first color range and or the detection algorithm is preferably defined such that images showing the first color of the marking 6 or the marker 6 as a color being in the first color range would still be able to detect the marker or marking 6. The first color range and or the detection algorithm is preferably defined such that images showing the first color of the marking 6 or the marker 6 as a color having a hue difference of 10°, preferably 20°, preferably 25°, preferably 30°, preferably 35° with respect to the (true) first color of the marker 6 are still detected as a first color range or as a first color region. The second color range is preferably defined as a color range around the second color 62 of the marker 6. The second color range is preferably larger than 20°, preferably larger than 30°, preferably than 40°, preferably than 50°, preferably than 60°, preferably than 70° around the hue of the second color 62. The second color range and or the detection algorithm is preferably defined such that images showing the second color of the marking 6 or the marker 6 as a color being in the second color range would still be able to detect the marker or marking 6. The second color range and or the detection algorithm is preferably defined such that images showing the second color of the marking 6 or the marker 6 as a color having a hue difference of 10°, preferably 20°, preferably 25°, preferably 30°, preferably 35° with respect to the (true) first color of the marker 6 are still detected as a second color range or as a second color region.

In a first embodiment, the first color regions and the second color regions are separately detected and afterwards combined to detect the position of the marking 6 or markers 6.

In the first embodiment, the first color regions are detected as the regions of the image 40 having a color falling in the first color range. The first color regions can be represented as a first binary mask showing the pixels of the image 40 or 41 having a color in the first color range as a first binary value and the pixels of the image 40 or 41 having a color outside of the first color range as a second binary value. However, other representations of the first second color regions are possible. the second color regions are detected as the regions of the image 40 having a color falling in the second color range. The second color regions can be represented as a second binary mask showing the pixels of the image 40 or 41 having a color in the second color range as a first binary value and the pixels of the image 40 or 41 having a color outside of the second color range as a second binary value. However, other representations of the second color regions are possible. Preferably, the processing means determines processed second color regions which fills the parts enclosed by the second color regions as second color region (or with the corresponding binary value of the second color region). There might be some further conditions, e.g. not to fill surfaces larger than a certain threshold to avoid that maybe a frame around the instrument in the second color range might lead to fill the complete image as the second region. For example, a processed second mask can be obtained by filling the regions enclosed by the second regions with the binary value corresponding to the second regions.

In the first embodiment, the processing means detects the position of the marking 6 based on a combination of the first color regions and the second color regions, preferably based on a combination of the first color regions and the processed second color regions. The combination is preferably such that the resulting regions are the regions where the first color regions and the second color regions overlap. This can be achieved very simply by making a pixel-wise boolean AND combination of the first binary mask and the processed second binary mask. The resulting regions correspond thus to the first color regions which are enclosed by a second color region. In this way, a very reliable way of finding the markers 6 is obtained. The position of each marker 6 can be obtained based on the resulting regions, e.g. by the center of gravity of each resulting region. It is also possible that the resulting regions are further processed before using them to detect the marker point based on the further processed resulting regions.

In a second embodiment, artificial intelligence (Al) engine or a statistical feature detection algorithm or other image processing techniques are used to combine the first and second color regions each representing a respective color range. While in the first embodiment, the detection of the first color regions and the second color regions and the combination of the first color regions and the second color regions to detect the position of the marker are distinct steps, in the second embodiment, these three steps can also be combined using an artificial intelligence (Al) engine or a statistical feature detection algorithm or other image processing techniques.

A neural network, preferably a convoluted neural network (CNN) can be used as artificial intelligence engine. For example, the image 40 can be used as input for the Al engine which detects then the position of the markers 6 or the marking 6. The Al engine is trained using many training images 40 taken under different light conditions, wherein for each training image 40, the position of the marking 6 or markers 6 are input as well in the Al engine. At least some of the training images represent the first color of the marking 6 or the marker 6 as a color having at least a hue difference of at least 10°, preferably at least 20°, preferably at least 25°, preferably at least 30°, preferably at least 35° with respect to the hue of the first color 61. At least some of the training images represent the second color of the marking 6 or the marker 6 as a color having at least a hue difference of at least 10°, preferably at least 20°, preferably at least 25°, preferably at least 30°, preferably at least 35° with respect to the hue of the second color 62. Like this, the Al engine can detect color marking comprising two colors appearing in the image 40 as distinct colors within the first color range and/or the second color range.

If the detection fails or if it is detected that there is not sufficient light for reading the instrument value from the image 40, the image 40 can be taken while the instrument display 5 is illuminated with the light 16. The detection can fail for example, because there are not enough markers 6 or marking points detected for realizing the detection or because the instrument value can not be detected from the image 40 or 41.

For the embodiment in which the reader device 10 is a handheld device, the processing means would first identify the code in the image 40 in order to identify the instrument 1. Once the instrument 1 is identified, the instrument value of the display 5 of the instrument 1 can be detected from the image 40 using the calibration information associated to the instrument 1 identified based on the code. For the embodiment in which the reader device 10 is fixedly mounted with respect to the instrument display 5, this step can be omitted, because the reader device 10 always reads the same instrument 1.

Preferably, the above-described functions of the processing means are preferably performed in the processor 12 of the reader device 10 so that the detected instrument value can be sent to the server 20. Since this avoids sending also the image 40 or 41 to the server 20, power consumption of the reader device can significantly be reduced because the wireless transmission of large data is an important factor for power consumption. In addition, wireless transmission bandwidth might be reduced for some systems/plants. By sending only the instrument values measured, the bandwidth required remains minimal.

Once the instrument value is detected in the processing means, preferably in the processor 12, the instrument value is sent to a collection point or central storage 22 where it is stored. Preferably the above processing is repeated periodically or at least regularly so that the storage 22 stores a historical evolution of the instrument parameter over time. This can be used for data mining, process optimization, etc. The storage 22 is preferably a database. However, other means for storing the instrument values over time are possible. The storage 22 is preferably connected to a server 20 through which the storage 22 is accessible.

The server 20 comprises preferably a user interface 23 for accessing the instrument values in the storage 22. The user interface 23 is preferably an interface allowing a remote client device to connect to the server 20 to access the instrument values in the storage 22. The remote client device is preferably a computing device like a computer, smartphone or tablet accessing via a browser the server 20 via the user interface. The server 20 can have a plurality of users so that each user can access the server 20 with its corresponding user credentials. The instruments 1 and/or the reader device 10 is normally associated to a user so that the user connecting to the server 20 can (only) access the instrument values related to the instruments 1 or reader devices 10 associated to the user.

The previous description of the processing means referred to the operation mode of the system or the reader device 10 in which the instrument value of the instrument display 5 is read based on the image 40 taken by the reader device 10. Since the reading or detection of the instrument value based on the image 40 might need some calibration information, there is preferably also a calibration mode of the system, in which the system is provided with the calibration information eventually necessary for the detection of the instrument value from the image 40.

The calibration information is preferably provided to the system or the processing means in a calibration mode. The calibration information for each instrument 1 is preferably stored in the storage 22. The storage 22 can comprise two separate (and independent) storages for storing the instrument values and for storing the calibration information. Preferably, there is a calibration information for each instrument 1. The calibration information of one or more instruments 1 is preferably synchronized with the reader device 10 which needs to read the instrument values of the one or more instruments 1. So, the reader device 10 will have also a storage 17 for storing the calibration information of the instrument 1. Thus, the reader device 10 has all the calibration information necessary for detecting the instrument value from the image 40.

The calibration information for an instrument 1 comprises preferably the following information.

The calibration information comprises a first calibration information about the marking 6. In particular, the first calibration information about the marking 6 comprises the marking points of the marking 6 in the reference image 41 of the instrument display 5. Thus, when the marking 6 is detected in the image 40 and thus the at least three marking points, the processing means can transform the image 40 such that the marking points correspond to the ones in the reference image as stored in the first calibration information. The first calibration information can further comprise a rough region of the image 40 in which the respective markers 6 should be detected, when the reader device 10 is mounted in a fixed position with respect to the instrument 1.

The calibration information comprises preferably a second calibration information allowing to detect the instrument value based on the image 40, more preferably based on the transformed image 41 or reference image. The second calibration information comprises the type of instrument display 5, the geometrical information about the reference positions of the display necessary for detecting the instrument value and/or any information required to detect the instrument value from the image 40 or 41.

For the embodiment in which the reader device 10 is used for multiple instruments 1, the calibration information comprises further a third calibration information allowing to detect the code attached to the instrument 1.

Fig. 2 shows the application of the system explained above in a plant or factory 2. The plant or factory can be an industrial plant (for producing energy, producing products, processing materials, etc.), a biological or pharmaceutical plant (like a clean room), or many more). The plant comprises preferably many instruments 1.1, 1.2, 1.3, 1.4, 1.5, ..., 1.n with displays 5 giving out the instrument values of these instruments 1.1, 1.2, 1.3, 1.4, 1.5, ..., 1.n. Traditionally, these instrument values are read by field officers 3. To automatize the reading of the instruments 1.1, 1.2, 1.3, 1.4, 1.5, ..., 1.n, a reader device 10.1, 10.2, 10.4, ..., 10.n are installed in front of the respective instrument display 5 of the instruments 1.1, 1.2, 1.4, and 1.n for which the reading shall be automatized. Each reader devices 10.1, 10.2, 10.4, ..., 10.n is installed at a fixed spatial relationship with respect to the instrument display 5 of the instruments 1.1, 1.2, 1.4, ..., 1.n so that each image 40 of each of the reader devices 10.1, 10.2, 10.4, ..., 10.n takes the image 40 of the instrument display 5 each time from the (substantially) same perspective. The reader devices 10.1, 10.2, 10.4, ..., 10.n can be fixed with a fixation means 4 in front of the display 5 of the respective instrument 1.1, 1.2, 1.4, ..., 1.n. Preferably, all instruments 1.1, 1.2, 1.3, 1.4, 1.5, ..., 1.n have a fixed reader device 10.1, 10.2, 10.3, 10.4, 10.5, ..., 10.n to continuously and reliably read the instrument values of these instruments 1.1, 1.2, 1.3, 1.4, 1.5, ..., 1.n. However, it is also possible to have some instruments like in the shown embodiment, instruments 1.3 and 1.5 which do not have a fixed reader device 10 in front. For them, a field officer 3 could use a handheld version of the reader device 10.k for reading these instruments 1.3 and 1.5. Preferably, these instruments 1.3 and 1.5 to be read by handheld reader devices 10.k (used for reading multiple instruments 1.3 and 1.5) have a code attached to identify the instrument 1.3 and 1.5 in the image 40 taken by the camera 11 of the reader device 10.k so that the calibration information of this instrument 1.3, 1.5 can be used for detecting the instrument value in the image 40 taken and for storing the read instrument value with the respective instrument 1.3 and 1.5. In one embodiment, it is also possible that all instruments 1 in a plant are read with a handheld reader device 10.k as shown in Fig. 2. The handheld reader device 10.k can be used for example for instruments 1.3 and 1.5 which need to be read only rarely. The instrument values read by the reader devices 10.1, 10.2, 10.4, ..., 10.n, 10.k are sent to a central storage 22 (preferably via the server 20).

Fig. 7 shows an example for a method for calibrating a system as described above. The method is described for one instrument 1 and can be equally applied on other instruments 1 of a plant.

In a step S1, the marking 6 is provided on the instrument 1. Providing the marking 6 means preferably to attach a marking 6 on the instrument 1. Preferably, the markers 6 are attached at the four corners of the display 5 (in case of a rectangular display) or well distributed around the display for other forms. Instead of attaching the marking 6 to the instrument 1, it is also possible to use an existing marking on the instrument 1 for this purpose. In this case, providing the marking 6 on the instrument 1 means just to identify the marking 6 on the instrument 1 and associate it in the system with the instrument 1. However, it is preferred to attach the marking 6 to the instrument 1 so that the same marking 6 can be used for all instruments 1 which makes the detection algorithm more robust.

In step S2, at least one image 40 is taken of the display 5 of the instrument 1 showing the display 5 and the marking 6. Preferably, the at least one image 40 is taken at a 90° angle between the camera axis and the surface of the display 5 (reference orientation) so that the image taken can be used directly as reference image. The reference image is also called calibration image.

However, it is also possible that the image 40 requires transformation into the reference orientation. This might be necessary, if the camera 11 cannot be placed in the reference orientation or if the image 40 in step S2 is not taken in the correct reference orientation, maybe be because it was not taken by an experienced person or because it was not taken at all and only the image from the mounting position of the reader device is available. The reference orientation of the image 40 is an orientation in which the image display 5 is shown in a front view, i.e. the image plane of the reference image is parallel to the surface plane of the display 5. This can be achieved with different geometrical image processing algorithms transforming the image such that the geometrical form of the image corresponds to a known form of the display 5. Most displays comprise well-defined geometrical forms like a rectangular or a circle. Thus, the image 40 can be transformed such that the geometrical form of the display 5 in the reference image corresponds to the well-known form. For example, for a rectangular display 5, the image 40 can be transformed that the edges of the display 5 (maybe not being parallel or rectangular in the image 40) in the reference image correspond to a rectangular. A similar processing can be done to transform an ellipsoidal display in the image 40 to a circular display 5 in the reference image. This transformation can be done manually by a user, semi-automatic or fully automated. In the first case, the user checks the image 40 and selects a geometrical form in the display 5 or on the instrument 1 to be used and fits the geometrical form over the image 40 so that from this fitted form, the transform of the image 40 to the reference image can be calculated. In a semi-automatic detection, the processing means could propose to the user already a form or a transform based on edge-detection in the image 40 and the user does only need to confirm (if correct) or correct (otherwise) the reference image. If the semi-automatic detection works with a low error rate, also a fully automated performance of this step is possible.

In step S3, the marking 6, in particularly the marking points of the marking 6 is/are detected in the reference image, especially the positions of the marking points are detected. The positions of the marking points are stored in the first calibration information. The position of the marking points is preferably the relative position of the marking points to each other in the reference image. This allows to transform future images 40 from almost any angle into the reference orientation to obtain the transformed image 41 based on the marker points detected in the image 40 and based on the relative position of the marker points in the reference image (retrieved then from the first calibration information).

In step S4, the first calibration information is determined based on the marking 6 in the reference image. Preferably, the spatial relationship of the at least three marking points or markers 6 in the reference image are stored as first calibration information. The spatial relationship can be stored as absolute coordinates in a coordinate system, e.g. the image coordinate system of the reference image or as relative measures between the marking points, e.g. the distance vectors of the marking points with respect to one reference marking point. that the spatial relationship of the at least three marking points allows to transform future images 40 easily into the reference orientation (transformed image 41) based on the at least three marking points detected in the image 40 and based on the spatial relationship of the at least three marking points in the reference image retrieved from the first calibration information.

In step S5, the second calibration information is determined based on the reference image. Preferably, the second calibration information comprises the type of instrument display 5 and the model parameters. The type of display 5 the instrument 1 has determines the detection algorithm to be used for the detection of the instrument values. The model parameters comprise geometrical information of the display 5 like the region of the display 5, the key points or regions necessary for detection, etc. The geometrical information in the reference image is defined preferably with respect to at least one marking point in the reference image. With the type of the instrument display 5 defining the detection model and the model parameters, it is possible to detect the instrument value based on the reference image (in the calibration mode) or on the transformed image 41 (in the operation mode).

In step S6, the calibration information is stored in association with the instrument 1 in the storage 22 of the server 20 and/or in the storage 17 of the reader device 10. Thus, when the instrument value of this instrument 1 must be read with the reader device 10, the calibration information can be used to detect the instrument value from an image 40 taken with the reader device 10. The calibration information comprises the first calibration information and the second calibration information. In case, that the instrument 1 is read with a handheld reader device 10, the third calibration information (or the code) is as well stored in the calibration information.

In a step S7, the reader device 10 is mounted in front of the instrument 1 so that the camera 11 of the reader device 10 takes an image 40 of the instrument display 5. The reader device 10 is mounted preferably in a fixed spatial relationship with respect to the instrument display 5 so that the image 40 is taken always from the same perspective. However, if the instrument 1 is read (instead of a fixed reader device 10) with a handheld reader device 10, a code is provided on the instrument 1 such that an image 40 of the instrument display 5 taken by the handheld reader device 10 would detect the code in the image 30. This code is then associated to the instrument 1 to identify the instrument 1. Providing the code on the instrument 1 is preferably attaching the code to the instrument 1, e.g. in step S1. However, it is also possible to use an existing code on the instrument 1 for this purpose. In this case, providing the code on the instrument 1 means just to identify the code on the instrument 1 and associate it in the system with the instrument 1. The step S7 happens preferably after step S2 of taking the image of the display 5, because the reference image taken in step S2 is preferably from the reference orientation which might not be the same as the installation orientation/position. The Step S7 can happen before, during or after any of the steps S3 to S7. However, it would also be possible to mount the reader device before taking the image used for calibration, i.e. S7 before S2. In this case, if the camera 11 or the reader device 10 is not mounted such that the image plane is parallel to the display plane, the image taken in S2 must be transformed into the reference orientation as explained above. This might for example be the case, if the technician mounting the reader device 10 forgot to take a front view image of the display 5 for the calibration in steps S3 to S6 before mounting the reader device 10.

If the reader device 10 was mounted after step S2, it is possible to take a further image 40 of the display from the mounting position of the reader device and detect the marking 6 in the image (similar to steps S2 and S3). This would allow to store the rough position of the markers 6 or the marking in the images 40 taken from the fixed mounting position of the reader device 10.

For the embodiment of the fixed reader device 10, a second image 40 taken in the fixed position of the reader device 10 can be used to further improve the calibration information with the sub-region(s) of the marking 6 in the image 40 taken from the fixed position of the reader device 10. These sub-regions can be stored in the (first) calibration information so that for future images 40, the marking 6 can be detected more robustly and with less processing power. Preferably, for each marker 6 or each marking point a respective sub-region of the image 40 is stored in the first calibration information so that for future images 40, each marking point or the position of each marker 6 can be detected more robustly and with less processing power.

In a preferred embodiment, the calibration can be performed remotely. This refers to one or more of the initial calibration steps such as the steps S3 to S6, but also to an update of the calibration information. This allows that any person without experience can perform the steps S1, S2 and S7, while the human intervention necessary for the calibration can be done from remote. As mentioned, this allows not only to let the reader device be installed by a person without expertise of calibration but allows as well to change the calibration information any time. This might be necessary, if the detection algorithm does not work properly or if for example one of the markers 6 did fell off and was attached in a (even slightly) new position. On the other side, due to the markers 6, a new calibration is not necessary, if the position or orientation of the reader device 10 changes with respect to the instrument display 5, because the markers 6 make it possible to re-find the transformed image 41 from any image orientation showing at least three markers.

The remote calibration necessitates that the (calibration) image (taken in step S2) from the reader device 2 is sent to the server 20 so that the calibration can be performed remotely from the server 20. Sending the image to the server 20 can mean that the image is sent to the server 20 and the calibration steps are processed in the server processing means 21. It can also mean that the calibration steps are performed on the reading device 10, and just the display image of the image is sent to the server 20 similar to a VPN connection. Also a mixture is possible, where some calibration steps are performed on the reader device 10, like step S3 which is done very efficiently on the reader device, and other calibration steps are performed on the server 20, e.g. the steps which require user interaction.

The system is preferably such that the reader device 10 in the operation mode detects the instrument value from the image 40 or 41 in the processor 12 of the reader device 10 and sends the detected instrument value from the reader device 10 to the server 20 (without sending the image 40 and/or 41), and such that the reader device 10 in the (remote) calibration mode sends the image to the server 20. This allows to reduce the bandwidth and power consumption of the reader device 10 by sending only the instrument value in the operation mode, but nevertheless permitting a remote calibration by sending the image in the calibration mode to the server 20. This allows a device which in the operation mode has an optimized power and bandwidth, nevertheless allows a mounting of the reader device in front of the instrument 1 by non-experts and a remote calibration of the reader device 10 in the calibration mode. The remote calibration allows to initialize the instrument reading after installation of the reader device 10 or the update of the calibration information, if the reader device 10 is not correctly working, from the distance, which makes the system very user-friendly.

This embodiment is particularly advantageous, when using markers 6 for detecting the instrument display 5 in the image 40. The markers 6 allow to avoid a recalibration of the reader device 10, when the reader device has changed its position, e.g. due to vibrations, wind or other forces on the reader device 10, because the markers 6 always allow to transform the image 40 taken by the reader device 10 into the reference orientation in which the detection of the instrument value is then facilitated. The system has thus a very robust detection algorithm against repositioning of the reader device 10, using a low power and bandwidth in the operation mode, but if nevertheless a re-calibration or the initial calibration is necessary, this can be done from a remote location. Thus, the combination of these three features, result in a unique user-friendly system for reading instruments.

The above-description referred to an instrument 1 with one display 5, but the invention can equally be applied to an instrument 1 having several displays 5. If the several displays are arranged in the same display plane, the same marking 6 can be used to support the detection of the instrument value of the first display and the detection of the instrument value of the second value. However, it is equally possible to choose a separate marking 6 for each display 5.

The display 5 was described to show one instrument parameter. However, it is also possible that the display 5 shows two or more instrument parameters. E.g. a first region of the display 5 might show a first instrument value (maybe a first line of a SSD or a main scale of a rotating needle indicator) while a second region of the display 5 might show a second instrument value (for the second instrument parameter) (for example a second line of a SSD or a sub-needle indicator arranged in the dial of the main needle indicator). The invention would work equally, just the display model would comprise two display sub-models defining the model of the first display region and of the second display region.

For color values like the hue provided in here for physical objects like the marker 6, the color should be defined based on a color measurement according to the standard ISO-13655 with a CIE light type D50 (M1). For color values in the image 40, 41, the pixel values of the image as recorded by the camera 11 are meant. Even if the colors are defined in here in a hue color space, the invention is not limited to the use of a hue color space. Even if the hue color space allows a very simple definition of the color ranges.

It should be understood that the present invention is not limited to the described embodiments and that variations can be applied without going outside of the scope of the claims.

## Claims

1. System for reading of an instrument:
a reader device (10) comprising a camera (5) for taking an image (40) of a display (5) of the instrument,
a processing means configured to perform the steps of:
detecting position of a marking (6) in the image, wherein the marking (6) comprises a first color (61) and a second color (62),
determining the position of the marking (6) in the image (40) based on a combination of first color regions and second color regions, and
determining based on the position of the detected marking (6) in the image (40) an instrument value shown in the display (5) of the instrument in the image (40),
**characterized in that** the first color regions refer to the at least one region of the image having a color in a first color range around the first color (61), and the second color regions refer to the at least one region of the image (40) having a color in a second color range around the second color (61).

2. System according to one of the previous claims, wherein the marking (6) comprises a plurality of markers (6), wherein each marker (6) has a first color (61) and a second color (62), wherein the position of each marker (6) is detected based on the combination of the first color regions and the second color regions.

3. System according to one of the previous claims, wherein the second color (62) of the marking (6) encloses the first color (61) of the marking (6).

4. System according to the previous claim, wherein processed second color regions are obtained by the second color regions and regions being enclosed by the second color region, wherein the position of the marking (6) is determined based on a Boolean AND combination of first color regions of the image and the processed second color regions of the image.

5. System according to one of claims 1 to 3, wherein the position of the marking (6) in the image (40) based on a combination of first color regions and second color regions is determined based on an artificial intelligence engine getting the image (40) as an input, wherein the artificial intelligence engine is trained with training images in which the first color of the marking (6) results as a different color in the first color range and/or in which the second color of the marking (6) results as a different color in the second color range.

6. System according to one of the previous claims, wherein the first color range comprises a range width of more than 40° around the hue of the first color (61) and/or the second color range comprises a range width of more than 40° around the hue of the second color (62).

7. System according to one of the previous claims, wherein the marking (6) or each marker (6) comprises further a third color (63), wherein the third color (63) of the marking (6) encloses the second color (62) of the marking (6).

8. System according to one of the previous claims, wherein the first color (61) and the second color (62) are true colors, wherein a true color is a color not being black or white, wherein preferably the third color is as well a true color.

9. System according to one of the previous claims, wherein the step of determining the instrument value comprises the steps of:
determining the position of at least three marking (6) points in the image based on the detected positions of the marking (6) or the markers (6);
determining a three-dimensional transform between the instrument display (5) and the image plane of the image based on the detected positions,
transforming the image based on the determined three-dimensional transform so that the instrument display (5) is parallel to the image plane, and
determining the instrument value from the transformed image.

10. System according to one of the previous claims, wherein the step of determining the instrument value comprises the steps of:
determining characteristic position(s) and/or region(s) of the instrument display (5) based the position of the marking (6) and/or based on the positions of the markers (6) in the image or in the transformed image, and
determining the instrument value in the image or the transformed image based on the characteristic position(s) and/or region(s).

11. System according to one of the previous claims comprising further the instrument (1), wherein the reader device (10) is mounted in a fixed relationship to the instrument (1) such that the camera (5) of the reader device (10) is oriented towards the display (5) of the instrument (1).

12. System according to one of the previous claims, wherein the reader device (10) is configured to send in an operation mode the instrument value to the server (20); wherein in a calibration mode, the reader device (10) is configured to send the image to the server (20) as calibration image, wherein the server (20) is configured to provide calibration information based on the calibration image, wherein the reader device (10) is configured to receive calibration information from the server (20) and to store the received calibration information in a storage of the reader device (10) used in the operation mode to detect the instrument value in the image in the processor of the reader device (10).

13. Reader device (10) for reading of an instrument (1) comprising:
a camera (5) for taking an image of a display (5) of the instrument (1),
a processor (12) configured to perform the steps of:
detecting a position of a marking (6) in the image, wherein the marking (6) comprises a first color (61) and a second color (62), and
determining based on the position of the detected marking (6) in the image an instrument value shown in the display (5) of the instrument (1) in the image,
**characterized in that** the processor is configured to detect in the image first color regions being in a first color range and second color regions being in the second color range, wherein the position of the marking (6) is determined based on a combination of the first color regions and the second color regions.

14. Method for reading of an instrument (1) comprising the following steps:
taking with a camera (5) of a reader device (10) an image of a display (5) of the instrument (1),
detecting with a processing means a position of a marking (6) in the image based on a combination of first color regions and second color regions, wherein the marking (6) comprises a first color (61) and a second color (62), and
determining based on the position of the detected marking (6) in the image an instrument value shown in the display (5) of the instrument (1) in the image,
**characterized in that** the first color regions refer to the at least one region of the image having a color in a first color range around the first color (61), and the second color regions refer to the at least one region of the image (40) having a color in a second color range around the second color (61).

15. Computer program for image detection of an instrument value of an instrument (1), wherein the computer program comprises the instructions configured, when executed on a processor, to perform the following steps:
taking with a camera (5) of a reader device (10) an image of a display (5) of the instrument (1),
detecting with a processing means a position of a marking (6) in the image based on a combination of first color regions and second color regions, wherein the marking (6) comprises a first color (61) and a second color (62), and
determining based on the position of the detected marking (6) in the image an instrument value shown in the display (5) of the instrument (1) in the image,
**characterized in that** the first color regions refer to the at least one region of the image having a color in a first color range around the first color (61), and the second color regions refer to the at least one region of the image (40) having a color in a second color range around the second color (61).
